# FASCICULE DE BREVET EUROPEEN

(11) **EP 3 061 558 B1**
(45) Date de publication et mention de la délivrance du brevet: **04.04.2018**
(21) Numéro de dépôt: 15156759.1
(22) Date de dépôt: 26.02.2015
(51) Int. Cl.: B23K 20/12, B23K 20/22, B23P 6/00

(54) **Procédé de soudage par friction malaxage pour réparer un défaut de soudage**
Reibrührschweißverfahren zum Reparieren eines Schweißdefekts
Method of friction stir welding for repairing a welding defect

(43) Date de publication de la demande: 31.08.2016
(73) Titulaire: Airbus Group SAS, 75016 Paris (FR)
(72) Inventeur: Marie, François, 92500 Rueil Malmaison (FR); Foucher, Gilles, 92320 Chatillon sous Bagneux (FR); Aliaga, Daniel, 69500 Bron (FR)
(74) Mandataire: Ipside

(56) Documents cités:
- JP-A- 2000 042 781
- JP-A- 2010 269 367
- JP-A- 2012 196 680
- US-A1- 2005 279 810
- US-A1- 2012 211 548
- US-A1- 2013 032 630

## Description

### DOMAINE DE L'INVENTION

L'invention se rapporte au domaine général du soudage par technique de friction malaxage, ou FSW selon l'acronyme de la dénomination anglo-saxonne "Friction Stir Welding". La technique FSW est de plus en plus utilisée pour le soudage sur les structures métalliques et plus particulièrement sur les structures en alliages d'aluminium.

L'invention traite plus particulièrement du problème des réparations de soudures réalisées par une telle technique et présentant des défauts ainsi que de celui de la retouche des défauts pouvant apparaître au niveau de la zone terminale d'une soudure. En particulier, l'invention concerne un procédé de réalisation de la retouche d'un défaut affectant une soudure conformément au préambule de la revendication 1 (voir, par exemple, JP 2012 196680 A).

### CONTEXTE DE L'INVENTION - ART ANTERIEUR

En soudage FSW conventionnel, l'outil laisse dans la matière, à l'extrémité de la ligne de soudure, une empreinte constituée généralement par un trou présentant la même géométrie que le pion, ce qui constitue un défaut rédhibitoire auquel on est contraint de remédier.

En soudage FSW, différents types d'outils peuvent être utilisés :
- Les outils conventionnels et les outils à double épaulement, ou "bobbin-tools" selon la dénomination anglo-saxonne, qui laissent un trou en fin de soudage.
- Les outils à pion rétractable, qui peuvent éviter la formation d'un trou de fin de soudure en opérant une rétraction progressive du pion sur une distance significative de la fin de soudage. La demande de brevet français déposée par la demanderesse et publiée sous la référence FR 2900082 décrit notamment un procédé mettant en oeuvre un tel outil.

Les soudages avec les outils conventionnels ou bobbin-tool sont pénalisés par la présence de l'empreinte évoquée précédemment en fin de ligne de soudure, empreinte qui nécessite le plus souvent de prévoir une zone de garde au niveau des pièces à souder, zone dans laquelle la ligne de
soudure se termine et qui est destinée à être éliminée de façon à donner aux pièces assemblées leurs dimensions et leur forme définitives. Une telle méthode de soudage induit donc l'exécution d'une reprise d'usinage sur les pièces soudées et nécessairement une production de rebuts, ce qui a pour conséquence d'accroitre le coût de l'assemblage.

Par ailleurs, la réparation de défauts de soudage pouvant apparaître le long de la ligne de soudure n'est pas facile à réaliser, de sorte qu'on est certaines fois contraint de mettre certains assemblages au rebut faute de pouvoir effectuer une retouche satisfaisante.

Le soudage avec pion rétractable présente quant à lui un caractère plus délicat. L'outil utilisé doit notamment présenter un pion de géométrie quasi cylindrique. L'opération de soudage comportant en outre une opération de rétractation progressive du pion en fin de ligne de soudure, l'outil mis en oeuvre est nécessairement plus complexe dans sa conception et est également plus fragile.

Il est à noter de plus que la réparation de défauts de soudage le long de la ligne de soudure, trous ou fissures, conduit nécessairement à une sous-épaisseur de matière dans la zone de réparation.

En ce qui concerne plus spécifiquement la réparation ou la reprise de soudures mal exécutées en certains points de la ligne de soudure, quelle que soit la méthode de soudage utilisée, il est également connu d'utiliser des méthodes de bouchage par friction ou "Friction plug welding" selon la dénomination anglo-saxonne consistant principalement à introduire au niveau de la défectuosité un apport de matière formant un bouchon et à souder par friction cette matière aux pièces déjà assemblées. Cette technologie nécessite d'une part le démontage de l'outillage de soudage et d'autre part, la reprise d'usinage (ou ragréage) des 2 faces de la soudure. De plus il faut disposer d'un appareil spécifique permettant la mise en oeuvre d'une telle méthode.

On connaît dans l'état de la technique la demande de brevet japonais N° JP 2012 196680 A, qui décrit un équipement mettant en oeuvre une technique de type « *Friction stir welding* » (soudage par technique de friction malaxage), pour réparer un trou dans une pièce en mettant en place dans le trou un rivet, qui est ensuite malaxé à l'aide de cette technique.

On connaît dans l'état de la technique la demande de brevet américain N° US 2012/211548 A1, qui divulgue un procédé de réparation d'un composant.

On connaît dans l'état de la technique la demande de brevet américain N° US 2005/279810 A1, qui décrit un procédé de réparation de type « *Friction stir welding »* (soudage par technique de friction malaxage).

### PRESENTATION DE L'INVENTION

Un but de l'invention est de proposer une solution permettant notamment, dans le cas d'une soudure réalisée par friction-malaxage au moyen d'un outil conventionnel, à épaulement simple ou double épaulement par exemple, de résoudre le problème d'apparition d'une empreinte (excavation, trou) en fin de ligne de soudure.

Un autre but de l'invention est de proposer une solution permettant, dans le même contexte notamment, de réaliser la retouche ou la réparation d'une soudure présentant des défauts le long de la ligne de soudure, ces défauts pouvant être des trous consécutifs à enlèvement de défauts ou rupture d'outils.

Un autre but de l'invention est de proposer une solution permettant, dans le même contexte notamment, de fermer une soudure circulaire ou circonférentielle. L'invention a pour objet un procédé de réalisation de la retouche d'un défaut affectant une soudure conformément à la revendication 1, ledit procédé comportant:
- une première étape de mise en place au niveau de la zone du défaut d'une plaque de métal d'apport, ladite plaque étant placée à la surface de la pièce soudée en regard de la zone du défaut;
- une deuxième étape de soudage local de la plaque de métal d'apport à la pièce soudée, le soudage étant réalisé au niveau de la zone du défaut à l'aide d'un moyen de soudage par friction malaxage comportant un pion de soudage rétractable;
- une troisième étape de désolidarisation de la pièce soudée et de la plaque de métal d'apport la désolidarisation étant réalisée de telle façon qu'elle laisse en place le métal d'apport amalgamé par soudage au métal de la pièce soudée.

Selon l'invention, la deuxième étape de soudage local comporte les opérations successives suivantes:
- Mise en rotation et en pression de l'outil à pion rétractable
- Enfoncement du pion rétractable jusqu'à une distance faible de quelques centaines de µm de la barre d'appui (i.e. de l'enclume) tout en maintenant ou en accentuant la pression sur l'épaulement;
- Retrait progressif du pion rétractable en maintenant ou en accentuant la pression sur l'épaulement;
- Arrêt du maintien sous pression de l'épaulement, lorsque le pion est rétracté au-dessus de la pièce.

Selon une autre caractéristique du procédé selon l'invention, la troisième étape de désolidarisation est réalisée en fin d'exécution de l'étape de soudage, en imprimant un déplacement de la plaque de métal d'apport dans le plan de la pièce avant l'arrêt de la rotation.

Selon une autre caractéristique du procédé selon l'invention, l'opération d'enfoncement du pion rétractable est accompagnée d'un enfoncement de l'épaulement, l'enfoncement de l'épaulement étant opéré à une vitesse de déplacement bien inférieure à celle du pion rétractable.

Selon une autre caractéristique du procédé selon l'invention, l'opération d'enfoncement du pion rétractable s'accompagne d'un déplacement orbital continu dudit pion.

Selon l'invention, celui-ci comporte en outre une quatrième étape complémentaire de reprise de l'état de surface de la pièce soudée au niveau de la zone de retouche.

### DESCRIPTION DES FIGURES

Les caractéristiques et avantages de l'invention seront mieux appréciés grâce à la description qui suit, description qui s'appuie sur les figures annexées qui présentent:
- les figures 1 et 2, des illustrations mettant en évidence le problème posé par le soudage par friction malaxage;
- la figure 3, une vue schématique illustrant la première étape du procédé selon l'invention;

- la figure 4, une vue schématique illustrant la deuxième étape du procédé selon l'invention;
- la figure 5, une vue schématique illustrant la troisième étape du procédé selon l'invention.

Il est à noter que sur les différentes figures, un même élément est affecté d'un même repère de rattachement.

### DESCRIPTION DETAILEE

Le principe de fonctionnement du procédé selon l'invention consiste, après soudage, pour réparer une zone de la ligne de soudure présentant un défaut, à effectuer un apport complémentaire de métal dans la zone considérée. Cet apport est réalisé au moyen d'une plaque de métal d'apport, placée contre la pièce soudée considérée, de façon à ce qu'elle couvre la zone de la ligne de soudure présentant le défaut à réparer.

L'apport de métal proprement dit est effectué en procédant au soudage local de la plaque de métal d'apport à la pièce assemblée au niveau de la ligne de soudure à l'endroit du défaut.

Quel que soit la technique de soudage utilisée pour réaliser la soudure considérée, le soudage local de la plaque de métal d'apport est quant à lui réalisé par friction malaxage. Cependant, l'outil utilisé est ici un outil à pion rétractable.

Ensuite, dès que le métal d'apport est lié à la pièce soudée, la plaque de métal d'apport est désolidarisée de la pièce.

Le procédé selon l'invention trouve son application préférentielle dans le cadre des soudages réalisés par friction malaxage au moyen d'outils conventionnel à simple épaulement ou double épaulement ("bobbin tools").

Ces outils présentent en effet l'inconvénient d'occasionner la formation systématique d'un trou ou du moins d'une excavation à l'extrémité de la ligne de soudure. Par ailleurs le procédé selon l'invention permet avantageusement de réparer d'éventuelles imperfections, cavités ou collages, localisées le long de cette même ligne.

Dans la suite de la description et pour des raisons de clarté et de simplicité d'exposé, on présente le procédé selon l'invention dans le cadre d'une opération de retouche d'une soudure réalisé au moyen d'un outil conventionnel à simple épaulement, la pièce soudée étant maintenue en place contre une enclume ou barre d'appui ("Backing Bar" selon la dénomination anglo-saxonne).

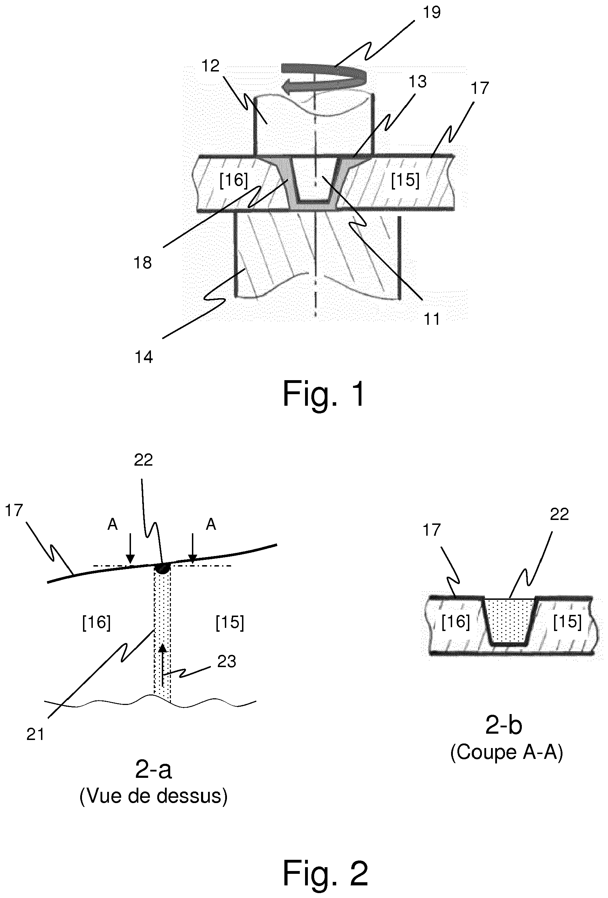

Cette présentation de l'invention, illustrée par les figures 1 à 5, est faite à titre d'exemple, pour permettre de mettre en évidence les caractéristiques du procédé selon l'invention. Elle n'a nullement pour objet de restreindre la portée ou l'étendue de l'invention à cette seule application.

Les illustrations des figures 1 et 2 présentent de manière schématique le problème systématiquement rencontré lorsque l'on réalise une pièce soudée 17 en soudant par friction-malaxage deux pièces 15 et 16 au moyen d'un outil conventionnel monobloc comportant un pion de soudage 11 monté de manière solidaire sur l'extrémité du corps 12 de l'outil et définissant un épaulement 13.

Selon un principe connu l'outil étant entrainé en rotation, comme indiqué par la flèche 19 et en translation, il est positionné de telle façon que le pion pénètre dans l'épaisseur du métal constituant les pièces 15 et 16 à souder l'épaulement 13 se trouvant positionné contre la surface de ces pièces. Ainsi, par friction, le métal constituant les pièces 15 et 16 à assembler est progressivement plastifié sur toute l'épaisseur des pièces dans la zone 18 de pénétration du pion 11.

S'agissant d'un outil à simple épaulement, il est à noter qu'une enclume 14, ou barre d'appui, est positionnée contre la surface des pièces 15 et 16 qui n'est pas en contact avec l'outil, de façon à ce que la pression appliquée par l'outil ne déforme pas les pièces. Dans le cas d'un outil à double épaulement, la fonction remplie par l'enclume 14 est remplie par le second épaulement placé sur la face opposée.

Par suite, l'outil étant entrainé en translation, comme indiqué par la flèche 23 sur l'illustration 2-a de la figure 2, la plastification du métal se propage de proche en proche de façon à former une ligne de soudure 21, l'espace laissé progressivement libre par le pion après son passage étant comblé par le métal plastifié. Cependant l'arrêt de l'outil à l'extrémité de la ligne de soudure 21 et son retrait au dessus de la surface de la pièce soudée 17 ainsi obtenue entraine généralement la création d'une zone 22 non comblée par du métal plastifié, cette zone visible en coupe sur l'illustration 2-b de la figure 2, ayant la forme d'une excavation, voire d'un trou, présentant sensiblement la forme en creux du pion 11. Cette zone 22 constitue un défaut de structure auquel il convient de remédier.

Outre ce problème systématique d'apparition d'un trou de fin de ligne de soudure, il est également possible de voir apparaitre des défauts de type cavité ou tunnel ou des collages (ou manques de liaison) le long de la ligne de soudure ou encore des fissures pour des procédés de soudage par fusion.

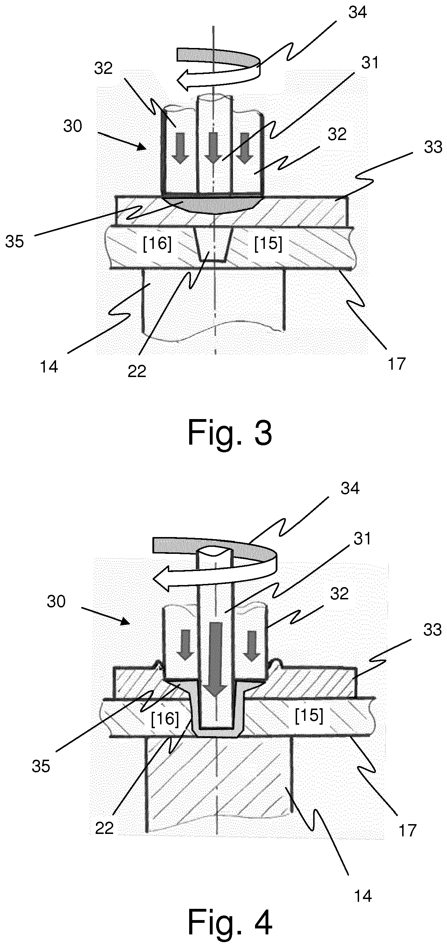

Les illustrations des figures 3 à 5 présentent, de manière schématique également, le principe de mise en oeuvre du procédé selon l'invention, procédé permettant avantageusement de remédier à ces défauts.

Le procédé selon l'invention consiste dans une phase préliminaire à positionner, au niveau de la zone dont la soudure est à reprendre (zone du défaut), un outil 30 de soudage par friction-malaxage, tel qu'illustré par la figure 3, comportant un pion rétractable 31 pouvant se déplacer en translation librement par rapport au corps 32 de l'outil, de telle façon que l'extrémité du pion 31 puisse se trouver soit en retrait à l'intérieur du corps 32, soit dans un même plan que l'extrémité du corps de l'outil, comme illustré par la figure 3 soit encore en saillie par rapport à cette extrémité, comme illustré par la figure 4. Dans ce dernier cas, l'extrémité du corps 32 constitue un épaulement vis-à-vis du pion 31. Dans la suite du texte, par extension, le corps 32 est appelé épaulement.

Dans le cas d'une pièce soudée par friction-malaxage, la mise en oeuvre du procédé selon l'invention est préférentiellement, réalisée alors que la pièce est encore maintenue en place, bridée en appui sur la barre d'appui (enclume). Dans le cas contraire le maintien en place de la pièce doit être réalisé lors de cette phase préliminaire par tout moyen approprié connu par ailleurs et non précisé ici.

Une fois cette phase préparatoire achevée le procédé selon l'invention consiste alors à implémenter les étapes suivantes:
- une première étape de mise en place, au niveau de la zone du défaut, d'une tôle 33 de métal d'apport, ladite tôle étant placé à la surface de la pièce soudée 17 en regard de la zone du défaut, de telle façon que ladite plaque se trouve interposée entre cette surface et l'extrémité de l'outil de soudage 30;
- une deuxième étape de soudage local de la tôle de métal d'apport 33 à la pièce soudée, le soudage étant réalisé à l'aide du moyen 30 de soudage par friction-malaxage à pion rétractable;
- une troisième étape de désolidarisation de la pièce soudée 17 et de la tôle 33 de métal d'apport, la désolidarisation étant réalisée de telle façon qu'elle laisse en place le métal d'apport 35 amalgamé par soudage au métal de la pièce soudée 17.

La mise en oeuvre de la deuxième étape consiste dans un premier temps à mettre en rotation l'outil à pion rétractable puis à positionner le tête de l'outil, au niveau de la zone du défaut, contre la surface de la tôle 33, en appliquant un effort sur les deux parties de l'outil, à savoir, le pion 31 et l'épaulement 32, les extrémités du pion 31 et de l'épaulement 32 étant situées dans un même plan. On forme ainsi, comme l'illustre la figure 3, une zone de friction 35 à la surface de la tôle 33, la friction mettant le métal en mouvement et en assurant la plastification.

Dans un deuxième temps, le pion 31, libre en translation, est ensuite enfoncé progressivement à l'intérieur de la matière constituant la tôle 33 jusqu'à traverser ladite tôle et pénétrer dans la pièce soudée 17 à l'endroit du défaut (trou, excavation ou simple défaut), la pression sur l'épaulement 32 étant maintenue, voire accentuée, de façon à assurer la plastification du métal d'apport. Le pion 31 entraine avec lui le métal rendu plastique qui vient se positionner autour du pion 31 dans l'excavation 22, comme illustré par la figure 4.

L'enfoncement du pion est prolongé jusqu'à une distance faible de quelques centaines de µm de l'enclume 14 de façon à ce que, lorsque le défaut considéré consiste, non en un trou, mais en un autre défaut, excavation ou autre, le pion réalise au niveau du défaut une excavation dont la profondeur est très légèrement inférieure à l'épaisseur de la pièce soudée.

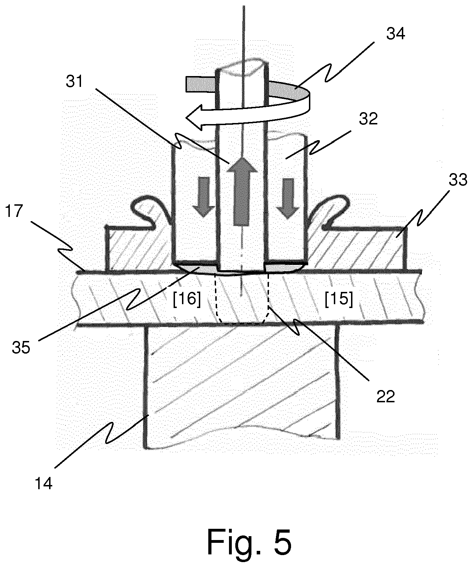

Dans un troisième temps, illustré par la figure 5, le pion 31 est rétracté progressivement à l'intérieur de l'épaulement 32 alors que la pression sur l'épaulement est maintenue voire accentuée de façon à ce que le volume de métal plastifié soit au moins suffisant pour combler l'excavation 22 dont le volume est libéré par le retrait du pion 31.

Selon l'invention l'enfoncement maximal dans l'épaisseur de la tôle 33 de l'épaulement 32, au cours des deuxième et troisième étapes, est déterminé de telle façon que ce dernier ne traverse pas la tôle et n'entre pas en contact avec la pièce 17. Préférentiellement, il est déterminé de façon à ce que la surface d'appui reste à une certaine distance de la face de la tôle en contact avec la pièce 17 afin de limiter le soudage de la tôle 33 à la surface de la pièce 17. La vitesse de pénétration de l'épaulement 32 dans la tôle est par ailleurs inférieure à la vitesse de pénétration du pion 31 dans la pièce soudée 17.

La troisième étape de désolidarisation de la pièce soudée 17 et de la tôle 33 de métal d'apport a pour objet, après arrêt du maintien sous pression de l'épaulement 32, lorsque le pion est retiré au-dessus de la pièce, de rompre les éventuels ponts métalliques pouvant avoir été formés au cours de l'étape de soudage par les résidus de métal plastifié venus se loger à l'interface entre la tôle 33 et la pièce soudée 17, notamment après que, le pion 31 s'étant totalement retiré, l'excavation pratiquée dans la pièce soudée a été totalement comblée, comme illustré par la figure 5.

La désolidarisation est réalisée de telle façon qu'elle laisse en place le métal d'apport amalgamé par soudage au métal de la pièce soudée 17.

De manière générale, du fait du maintien de la pression exercée sur l'épaulement 32 jusqu'à la fin de l'étape de soudage, il est avantageusement relativement aisé de séparer la pièce soudée 17 de la parti de la tôle 33 non utilisée pour réparer le défaut considéré en appliquant un effort de traction ou de cisaillement par exemple.

Par suite, selon une forme de mise en oeuvre préférée, mais non pour autant exclusive, la désolidarisation de la pièce soudée 17 et de la tôle 33 de métal d'apport est réalisée en fin d'exécution de l'étape de soudage, en imprimant un déplacement latéral de la plaque de métal d'apport dans le plan de la pièce avant l'arrêt de la rotation de l'outil.

Bien qu'étant réalisée de façon à réparer au mieux le défaut de soudure considéré, en restituant à la pièce soudée 17 un état de surface aussi proche que possible de l'état de surface général que présente ladite pièce, il est néanmoins possible que dans la zone de réparation du défaut considéré, la surface de la pièces soudée présente certaines irrégularités ou aspérités dont l'apparition peut être notamment consécutive de l'exécution de la phase de désolidarisation de la pièce 17 de la tôle 33.

C'est pourquoi le procédé selon l'invention comporte une quatrième étape de reprise de l'état de surface de la pièce soudée 17 (une reprise d'usinage ou un ragréage) en particulier au niveau de la zone de retouche.

Comme cela apparait à la lecture de la description qui précède, la mise en oeuvre du procédé selon l'invention implique l'utilisation d'un outil de soudage par friction-malaxage à pion rétractable. On utilise ici préférentiellement un outil à pion cylindrique dont le diamètre est légèrement supérieur à celui du trou ou de l'excavation à combler. De manière également préférentielle, l'épaulement 32 de l'outil a un diamètre de l'ordre d'une fois et demie à trois fois de celui du pion 31.

Par ailleurs l'épaisseur de la tôle 33 de métal d'apport est préférentiellement inférieure à celle de la pièce soudée 17. Ainsi selon les cas, la valeur de l'épaisseur de la tôle 33 est de l'ordre de 1/4 à 2/3 de celle de l'épaisseur de la pièce soudée 17.

Le métal d'apport est en outre préférentiellement identique à celui constituant la pièce 17.

Du point de vue de la mise en oeuvre du procédé selon l'invention il est à noter que la tôle de métal d'apport doit, lors de sa mise en place (première étape du procédé) être bloquée en rotation.

Il est à noter par ailleurs que les vitesses de rotation et les efforts d'enfoncement du pion 31 et de l'épaulement 32, vitesses dont les valeurs peuvent être différentes pour le pion et pour l'épaulement, sont fonction du matériau constituant la pièce soudée 17, de son épaisseur, des dimensions du trou à combler et de l'outil de soudage. Cette mise au point des vitesses de rotation, et des vitesses d'enfoncement, s'apparente aux traditionnelles mises au point que l'on fait en soudage par malaxage et qui sont fonction du cas à souder.

Ainsi qu'il ressort de la description précédente la mise en oeuvre du procédé selon l'invention ne prévoit que des déplacements de l'outil (pion 31 et épaulement 32) perpendiculaires à la surface de la pièce soudée 17.

Néanmoins, dans une forme de mise en oeuvre particulière il est possible de prévoir un relatif déplacement latéral de l'outil, un déplacement selon un mouvement orbital par exemple. Un tel mouvement permettrait avantageusement de réaliser la réparation de défauts de différentes tailles au moyen d'un outil unique aux dimensions nominalement adaptées à des défauts de taille donnée.

## Revendications

1. Procédé de réalisation de la retouche d'un défaut affectant une soudure, **caractérisé en ce qu'**il comporte:
- une première étape de mise en place au niveau de la zone du défaut d'une plaque (33) de métal d'apport, ladite plaque étant placée à la surface de la pièce soudée (17) en regard de la zone (22) du défaut, et bloquée en rotation;
- une deuxième étape de soudage local de la plaque (33) de métal d'apport à la pièce soudée (17), le soudage étant réalisé au niveau de la zone (22) du défaut à l'aide d'un moyen de soudage (30) par friction malaxage comportant un pion de soudage rétractable (31);
- une troisième étape de désolidarisation de la pièce soudée (17) et de la plaque (33) de métal d'apport, la désolidarisation étant réalisée de telle façon qu'elle laisse en place le métal d'apport (35) amalgamé par soudage au métal de la pièce soudée (17) et **en ce que** l'étape de soudage local comporte les opérations successives suivantes:
- Mise en rotation (34) et en pression de l'outil (30) à pion rétractable
- Enfoncement du pion rétractable (31) jusqu'à une distance faible de quelques centaines de µm de l'enclume (14) tout en maintenant ou en accentuant la pression sur l'épaulement (32);
- Retrait progressif du pion rétractable (31) en maintenant ou en accentuant la pression sur l'épaulement (32) ;
- Arrêt du maintien sous pression de l'épaulement (32) lorsque le pion rétractable (31) est retiré au-dessus de la pièce (17) ;
et **en ce qu'**il comporte en outre une quatrième étape complémentaire de reprise de l'état de surface de la pièce soudée (17) au niveau de la zone de retouche (22).

2. Procédé selon la revendication 1, **caractérisé en ce que**, l'étape de désolidarisation est réalisée en fin d'exécution de l'étape de soudage, en imprimant un déplacement de la plaque (33) de métal d'apport dans le plan de la pièce (17) avant l'arrêt de la rotation (34).

3. Procédé selon l'une des revendications 1 ou 2, **caractérisé en ce que**, l'opération d'enfoncement du pion rétractable (31) est accompagnée d'un enfoncement de l'épaulement (32), l'enfoncement de l'épaulement (32) étant opéré à une vitesse de déplacement bien inférieure à celle du pion rétractable (31).

4. Procédé selon l'une quelconque des revendications 1 à 3, **caractérisé en ce que** l'opération d'enfoncement du pion rétractable (31) s'accompagne d'un déplacement orbital continu dudit pion.

## Patentansprüche

1. Verfahren zum Ausführen der Reparatur eines Defekts, der eine Schweißung betrifft, **dadurch gekennzeichnet, dass** es Folgendes umfasst:
- einen ersten Schritt des Einrichtens im Bereich der Zone des Defekts einer Schweißzusatzmetallplatte (33), wobei die Platte an der Oberfläche des geschweißten Teils (17) gegenüber der Zone (22) des Defekts platziert und in Drehung blockiert wird;
- einen zweiten Schritt des lokalen Schweißens der Schweißzusatzmetallplatte (33) an das geschweißte Teil (17), wobei das Schweißen im Bereich der Zone (22) des Defekts mit Hilfe eines Schweißmittels (30) durch Reibrühren, das einen einziehbaren Schweißzapfen (31) umfasst, ausgeführt wird;
- einen dritten Schritt des Trennens des Schweißen Teils (17) und der Schweißzusatzmetallplatte (33), wobei das Trennen derart ausgeführt wird, dass das Schweißzusatzmetall (35), das durch Schweißen an das Metall des geschweißten Teils (17) verschmolzen ist, an Ort und Stelle lässt, und dass der lokale Schweißschritt die folgenden aufeinanderfolgenden Vorgänge umfasst:
- Indrehungversetzen (34) und Druckbeaufschlagen des Werkzeugs (30) mit einziehbarem Zapfen;
- Eindrücken des einziehbaren Zapfens (31) bis zu einem kleinen Abstand von einigen Hundert µm des Ambosses (14) unter gleichzeitigem Halten oder Verstärken des Drucks auf dem Ansatz (32);
- allmähliches Zurückziehen des einziehbaren Zapfens (31) unter Halten oder Verstärken des Drucks auf dem Ansatz (32);
- Stoppen des Druckbeaufschlagens des Ansatzes (32), wenn der einziehbare Zapfen (31) über dem Teil (17) zurückgezogen wird;
und dass es außerdem einen vierten komplementären Schritt der Nachbesserns des Oberflächenzustands des geschweißten Teils (17) im Bereich der Reparaturzone (22) umfasst.

2. Verfahren nach Anspruch 1, **dadurch gekennzeichnet, dass** der Schritt des Trennens am Ende der Ausführung des Schweißschritts ausgeführt wird, indem eine Verschiebung der Schweißzusatzmetallplatte (33) in der Ebene des Teils (17) vor dem Stoppen der Drehung (34) verliehen wird.

3. Verfahren nach einem der Ansprüche 1 oder 2, **dadurch gekennzeichnet, dass** der Eindrückvorgang des einziehbaren Zapfens (31) von einem Eindrücken des Ansatzes (32) begleitet ist, wobei das Eindrücken des Ansatzes (32) mit einer Bewegungsgeschwindigkeit vorgenommen wird, die viel geringer ist als die des einziehbaren Zapfens (31) .

4. Verfahren nach einem der Ansprüche 1 bis 3, **dadurch gekennzeichnet, dass** der Eindrückvorgang des einziehbaren Zapfens (31) von einer kontinuierlichen orbitalen Verschiebung des Zapfens begleitet ist.

## Claims

1. Method for reworking a defect affecting a weld, **characterized in that** it comprises:
- a first step of placing a sheet (33) of filler metal in the region of the defect, the said sheet being placed on the surface of the welded part (17) opposite the region (22) of the defect and being blocked against rotation;
- a second step of locally welding the sheet (33) of filler metal to the welded part (17), the welding being carried out in the region (22) of the defect with the aid of a friction stir welding means (30) comprising a retractable welding pin (31) ;
- a third step of separating the welded part (17) and the sheet (33) of filler metal, the separation being carried out such that it leaves in place the filler metal (35) amalgamated by welding with the metal of the welded part (17), and **in that** the local welding step comprises the following successive operations:
- setting the tool (30) with a retractable pin in rotation (34) and putting it under pressure;
- inserting the retractable pin (31) to a small distance of a few hundred µm from the anvil (14) while maintaining or accentuating the pressure on the shoulder (32);
- progressively withdrawing the retractable pin (31) while maintaining or accentuating the pressure on the shoulder (32);
- stopping pressure being maintained on the shoulder (32) when the retractable pin (31) is withdrawn above the part (17);
and **in that** it additionally comprises a fourth additional step of renewing the surface state of the welded part (17) in the reworked region (22).

2. Method according to Claim 1, **characterized in that** the separating step is carried out at the end of execution of the welding step by imparting a movement of the sheet (33) of filler metal in the plane of the part (17) before the stopping of the rotation (34).

3. Method according to either of Claims 1 and 2, **characterized in that** the operation of inserting the retractable pin (31) is accompanied by an insertion of the shoulder (32), the insertion of the shoulder (32) being carried out at a rate of movement much lower than that of the retractable pin (31).

4. Method according to any one of Claims 1 to 3, **characterized in that** the operation of inserting the retractable pin (31) is accompanied by a continuous orbital movement of the said pin.
